(19)

**Europäisches Patentamt**
**European Patent Office**
**Office européen des brevets**

(11) **EP 3 624 497 A1**

(12) **EUROPEAN PATENT APPLICATION**
published in accordance with Art. 153(4) EPC

(43) Date of publication:
**18.03.2020 Bulletin 2020/12**

(21) Application number: **18823939.6**

(22) Date of filing: **22.05.2018**

(51) Int Cl.:
*H04W 40/20* (2009.01)

(86) International application number:
**PCT/CN2018/087891**

(87) International publication number:
**WO 2019/001175 (03.01.2019 Gazette 2019/01)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **27.06.2017 CN 201710499498**

(71) Applicant: **Huawei Technologies Co., Ltd.**
**Longgang District**
**Shenzhen, Guangdong 518129 (CN)**

(72) Inventors:
• **YANG, Li**
  **Shenzhen**
  **Guangdong 518129 (CN)**
• **SUN, Weiwei**
  **Shanghai 201203 (CN)**
• **WU, Hao**
  **Shanghai 201203 (CN)**

(74) Representative: **Grünecker Patent- und**
**Rechtsanwälte**
**PartG mbB**
**Leopoldstraße 4**
**80802 München (DE)**

(54) **POSITIONING OFFSET CORRECTION METHOD AND APPARATUS**

(57)     This application provides a positioning correction method and apparatus, to correct a positioning track obtained based on a base station positioning technology. In this solution, after determining a moving path of a terminal device, a positioning correction apparatus determines, in the moving path, target road sections corresponding to a plurality of measured locations of the terminal device; the apparatus selects, from the plurality of measured locations, a measured location whose distance to a projection location of the corresponding target road section is less than a specified threshold as a reference location; and the apparatus determines, in the moving path, that corrected locations of the plurality of reference locations are projection locations of the plurality of reference locations in the corresponding target road sections, and determines a corrected location of another measured location in the moving path based on timestamps of the plurality of measured locations and the corrected locations of the plurality of reference locations. According to the foregoing solution, the apparatus can determine a corrected location of each measured location in the moving path, to correct the positioning track obtained based on the base station positioning technology.

S401
A positioning correction apparatus obtains a plurality of measured locations of a terminal device

S402
The positioning correction apparatus selects a plurality of matching locations from the plurality of measured locations

S403
The positioning correction apparatus matches the plurality of matching locations to a road network, to obtain target road sections corresponding to all matching locations

S404
The positioning correction apparatus obtains a moving path of the terminal device based on the obtained target road sections corresponding to all the matching location and road section distribution in the road network

S405
The positioning correction apparatus determines, in the moving path, a target road section corresponding to a measured location different from the plurality of matching locations in the plurality of measured locations

S406
The positioning correction apparatus selects a plurality of reference locations from the plurality of measured locations

S407
The positioning correction apparatus determines that corrected locations of the plurality of reference locations in the moving path are projection locations of the plurality of reference locations in the corresponding target road sections

S408
The positioning correction apparatus obtains timestamps of the plurality of measured locations

S409
The positioning correction apparatus determines, in the moving path and based on the timestamps of the plurality of measured locations and the corrected locations of the plurality of reference locations, a corrected location of a measured location different from the plurality of reference locations in the plurality of measured locations

FIG. 4

## Description

This application claims priority to Chinese Patent Application No. 201710499498.4, filed with the China National Intellectual Property Administration on June 27, 2017 and entitled "POSITIONING CORRECTION METHOD AND APPARATUS", which is incorporated herein by reference in its entirety.

## TECHNICAL FIELD

This application relates to the field of computer technologies, and in particular, to a positioning correction method and apparatus.

## BACKGROUND

With the rapid development of wireless networks and technologies such as mobile communication, positioning services combined with advanced mobile communication technologies become one of the most promising and potential mobile Internet value-added services, for example, peripheral tasks and resource searches, interest recommendations, travel navigation, and meeting guides. Currently, common positioning technologies of the mobile communication technology are a global positioning system (global positioning system, GPS) technology, a wireless local area network positioning technology, and a base station positioning technology.

The base station positioning technology is a technology of obtaining location information (such as longitude and latitude coordinate information) of a terminal device through a network of a telecommunication mobile operator, such as a positioning method based on time difference of arrival (time difference of arrival, TDOA), and a positioning method based on signal strength. The technology has advantages of high positioning speed, wide coverage range, low cost, less power consumption, and the like, and has wider application in the positioning services.

In the base station positioning technology, various positioning methods need to be performed by using reference signals transmitted between the terminal device and a base station. However, transmission of the reference signal is affected by a plurality of factors (such as weather, interference, and obstacles). Therefore, there is a great problem in the base station positioning technology, that is, positioning accuracy is relatively low, and a deviation can reach several hundred meters. Therefore, correcting a positioning track obtained based on the base station positioning technology is an urgent problem to be resolved in the field of positioning.

## SUMMARY

This application provides a positioning correction method and apparatus, to correct a positioning track obtained based on a base station positioning technology.

According to a first aspect, this application provides a positioning correction method. The method is applicable to a positioning correction apparatus (for example, a terminal device, a base station, or a positioning server that has a positioning correction function). The positioning correction apparatus can perform the method by using the following steps:

obtaining a plurality of measured locations of a terminal device, where any one of the measured locations is a physical location of the terminal device that is obtained by a measurement device by performing positioning measurement on the terminal device, and the measurement device is the terminal device or a base station;

selecting a plurality of matching locations from the plurality of measured locations;

matching the plurality of matching locations to a road network, to obtain a target road section corresponding to each matching location, where the road network is a road section set including a plurality of crossing road sections in different directions;

obtaining a moving path of the terminal device based on the obtained target road section corresponding to each matching location and road section distribution in the road network, where road sections forming the moving path include at least the obtained target road section corresponding to each matching location;

determining, in the moving path, a target road section corresponding to a measured location different from the plurality of matching locations in the plurality of measured locations;

selecting a plurality of reference locations from the plurality of measured locations, where a distance between any one of the reference locations and a projection location of the reference location in the corresponding target road section is less than a specified threshold;

determining that corrected locations of the plurality of reference locations in the moving path are projection locations of the plurality of reference locations in the corresponding target road sections;

obtaining timestamps of the plurality of measured locations, where the timestamp of any one of the measured locations is a time at which the measured location is obtained through measurement; and determining, in the moving path and based on the timestamps of the plurality of measured locations and the corrected locations of the plurality of reference locations, a corrected location of a measured location different from the plurality of reference locations in the plurality of measured locations.

According to the method, the positioning correction apparatus can determine a corrected location of each measured location in the moving path, to correct the positioning track obtained based on the base station positioning technology. In addition, in the foregoing solution, a distance between the reference location selected by the apparatus and the projection location of the corresponding target path is less than the specified threshold. Therefore, an error between the corrected location of the reference location that is determined by the apparatus and an actual location of the terminal device is relatively small, that is, the apparatus can improve confidence of the determined corrected location of the reference location, thereby improving confidence of a corrected location of another measured location that is determined based on the corrected location of the reference location. Obviously, according to the foregoing solution, positioning track data generated based on the base station positioning technology can be corrected and confidence and accuracy of the determined corrected location can be improved.

In a possible design, the positioning correction apparatus may obtain the plurality of measured locations in, but not limited to, the following manners.

Manner 1: When the positioning correction apparatus is the measurement device, the positioning correction apparatus can directly obtain the measured location that is obtained by measurement.

Manner 2: When the positioning correction apparatus is a positioning server and the measurement device is the terminal device, the positioning correction apparatus obtains the plurality of measured locations through the following steps:

measuring, by the terminal device, the plurality of measured locations; sending, by a base station that serves the terminal device, the plurality of measured locations to the positioning correction apparatus; and obtaining, by the positioning correction apparatus, the plurality of measured locations sent by the base station.

Manner 3: When the positioning correction apparatus is the base station and the measurement device is the terminal device, the positioning correction apparatus obtains the plurality of measured locations sent by the terminal device.

Manner 4: When the positioning correction apparatus is a positioning server and the measurement device is the base station, the positioning correction apparatus obtains the plurality of measured locations sent by the base station.

Manner 5: When the positioning correction apparatus is the terminal device and the measurement device is the base station, the positioning correction apparatus obtains the plurality of measured locations sent by the base station.

The positioning correction apparatus can successfully obtain the plurality of measured locations in the foregoing manners.

In a possible design, the positioning correction apparatus matches the plurality of matching locations to the road network by using a map-matching algorithm based on a hidden Markov model HMM, to obtain the target road section corresponding to each matching location in the road network.

According to the foregoing method, the positioning correction apparatus can improve accuracy of determining a target road section corresponding to each matching location.

In a possible design, if the plurality of matching locations include the initial measured location and the last measured location in the plurality of measured locations, the positioning correction apparatus can determine, in the moving path, the target road section corresponding to the measured location different from the plurality of matching locations in the plurality of measured locations by using the following methods:

First, the positioning correction apparatus determines two matching locations neighboring the left side and the right side of a first measured location, where the first measured location is a measured location different from the plurality of matching locations in the plurality of measured locations.

Then, the positioning correction apparatus determines one or more to-be-selected road sections between the two matching locations in the moving path.

The positioning correction apparatus uses the to-be-selected road section as a target road section corresponding to the first measured location, when there is one determined to-be-selected road section.

The positioning correction apparatus selects a target road section corresponding to the first measured location from the plurality of to-be-selected road sections, when there are a plurality of determined to-be-selected road sections, where a first distance between the first measured location and a first projection location is less than a second distance between the first measured location and a second projection location, the first projection location is a projection location of the first measured location in the selected target road section, and the second projection location is a projection location of the first measured location in any to-be-selected road section different from the selected target road section in the plurality of to-be-selected road sections.

In an actual application, a smaller distance between a measured location and a road section indicates a greater probability that an actual location of the terminal device is on the road section when the measured location is obtained through measurement. Therefore, according to the foregoing method, accuracy of determining, by the positioning correction apparatus, target road sections corresponding to measured locations between two neighboring matching locations can be improved.

In a possible design, the positioning correction apparatus can determine, in the moving path and based on the timestamps of the plurality of measured locations and the corrected locations of the plurality of reference locations, a corrected location of a measured location different from the plurality of reference locations in the plurality of measured locations by using the following steps:

determining, by the positioning correction apparatus, two reference locations neighboring the left side and the right side of a second measured location, where the second measured location is a measured location different from the plurality of reference locations in the plurality of measured locations;
determining, by the positioning correction apparatus, a total distance between a first corrected location and a second corrected location along the moving path, where the first corrected location is a corrected location of a first reference location in the two reference locations, and the second corrected location is a corrected location of a second reference location in the two reference locations;
determining, by the positioning correction apparatus, total duration between timestamps of the two reference locations;
calculating, by the positioning correction apparatus based on the total distance and the total duration, an average speed of the terminal device moving from the first corrected location to the second corrected location along the moving path;
determining, by the positioning correction apparatus, relative duration between a timestamp of the second measured location and a timestamp of the first reference location;
determining, by the positioning correction apparatus, a relative moving distance of the terminal device based on the average speed and the relative duration; and
determining, by the positioning correction apparatus, a corrected location of the second measured location in the moving path based on the relative moving distance, where a distance between the first corrected location and the corrected location of the second measured location along the moving path is the relative moving distance.

According to the foregoing method, the positioning correction apparatus can determine the corrected locations of the measured locations between the two neighboring reference locations.

According to a second aspect, an embodiment of this application further provides a positioning correction apparatus. The apparatus has a function of implementing the positioning correction apparatus in the foregoing method example. The function may be implemented by hardware, or may be implemented by hardware executing corresponding software. The hardware or the software includes one or more modules corresponding to the foregoing function.

In a possible design, a structure of the apparatus includes an obtaining unit, a first selection unit, a matching unit, a determining unit, a second selection unit, and a processing unit, and the units can perform the corresponding functions in the foregoing method example. For details, refer to the detailed descriptions in the method example. Details are not described herein again.

In a possible design, a structure of the apparatus includes a processor and a memory. The processor is configured to support the apparatus in performing corresponding functions in the foregoing methods. The memory is coupled to the processor, and the memory stores a program instruction and data that are necessary for the processor.

According to a third aspect, an embodiment of this application further provides a computer-readable storage medium. The computer-readable storage medium stores computer software instructions for performing the function according to the first aspect or any one of the foregoing designs. The computer software instructions include a program designed to perform the methods according to the first aspect and any one of the foregoing designs.

According to a fourth aspect, an embodiment of this application further provides a computer program product including an instruction. When the instruction is run on a computer, the computer is enabled to perform the method according to the first aspect.

In the solution provided in the embodiments of this application, a distance between the reference location selected by the apparatus and the projection location of the corresponding target path is less than the specified threshold. Therefore, an error between the corrected location of the reference location that is determined by the apparatus and an actual location of the terminal device is relatively small, that is, the apparatus can improve confidence of the determined corrected location of the reference location, thereby improving confidence of a corrected location of another measured location that is determined based on the corrected location of the reference location. Obviously, according to the foregoing solution, positioning track data generated based on the base station positioning technology can be corrected and confidence and accuracy of the determined corrected location can be improved.

**BRIEF DESCRIPTION OF DRAWINGS**

FIG. 1 is a schematic diagram of a road network according to an embodiment of this application;
FIG. 2 is an exemplary diagram of a road network according to an embodiment of this application;
FIG. 3 is an architectural diagram of a positioning correction system according to an embodiment of this application;
FIG. 4 is a flowchart of a positioning correction method according to an embodiment of this application;
FIG. 5 is an exemplary diagram of selecting a matching location according to an embodiment of this application;
FIG. 6 is a first exemplary diagram of determining a target road section corresponding to a measured location according to an embodiment of this application;
FIG. 7 is a second exemplary diagram of determining a target road section corresponding to a measured location according to an embodiment of this application;
FIG. 8 is an exemplary diagram of determining a corrected location of a measured location according to an embodiment of this application;
FIG. 9 is a structural diagram of a positioning correction apparatus according to an embodiment of this application; and
FIG. 10 is a structural diagram of another positioning correction apparatus according to an embodiment of this application.

**DESCRIPTION OF EMBODIMENTS**

This application provides a positioning correction method and apparatus, to correct a positioning track obtained based on a base station positioning technology. The method and the apparatus are based on a same inventive concept. The method and the apparatus have similar problem-resolving principles. Therefore, for implementation of the method and the apparatus, refer to each other, and repeated content is not described again.

In the solution provided in the embodiments of this application, a positioning correction apparatus determines a moving path of a terminal device, and determines, in the moving path, target road sections corresponding to a plurality of measured locations of the terminal device, where the measured location is obtained through measurement by using a base station positioning technology. The apparatus selects, from the plurality of measured locations, a measured location whose distance to a projection location of a corresponding target path is less than a specified threshold as a reference location. The apparatus determines, in the moving path, that corrected locations of the plurality of reference locations are projection locations of the plurality of reference locations in the corresponding target road sections. The apparatus determines, based on timestamps of the plurality of measured locations and the corrected locations of the plurality of reference locations, a corrected location of a measured location different from the plurality of reference locations in the moving path. According to the foregoing solution, the apparatus can determine a corrected location of each measured location in the moving path, to correct the positioning track obtained based on the base station positioning technology. In addition, in the foregoing solution, a distance between the reference location selected by the apparatus and the projection location of the corresponding target path is less than the specified threshold. Therefore, an error between the corrected location of the reference location that is determined by the apparatus and an actual location of the terminal device is relatively small, that is, the apparatus can improve confidence of the determined corrected location of the reference location, thereby improving confidence of a corrected location of another measured location that is determined based on the corrected location of the reference location. Obviously, according to the foregoing solution, positioning track data generated based on the base station positioning technology can be corrected and confidence and accuracy of the determined corrected location can be improved.

In the following, some terms in this application are described, to help a person skilled in the art have a better understanding.

(1) A measured location is a physical location of a terminal device that is measured by a measurement device (such as a base station or a terminal device) by using a base station positioning technology, and the physical location can be identified by longitude and latitude coordinates, coordinates of the terminal device in a road network, and the like.
(2) A base station positioning technology is a technology in which a measurement device obtains location information of a terminal device through a network of a telecommunication mobile operator (such as a GSM network). For example, after a base station sends a reference signal to the terminal device, the measurement device obtains measurement information such as TDOA or signal strength of the reference signal, and calculates, based on the obtained measurement information, a current physical location (that is, a measured location) of the terminal device. The measurement device may be the terminal device or the base station.
(3) A road network is a road section set that includes a plurality of crossing road sections in different directions and that is in a shape of a "network". The road network can be embodied by a map (for example, an electronic map).

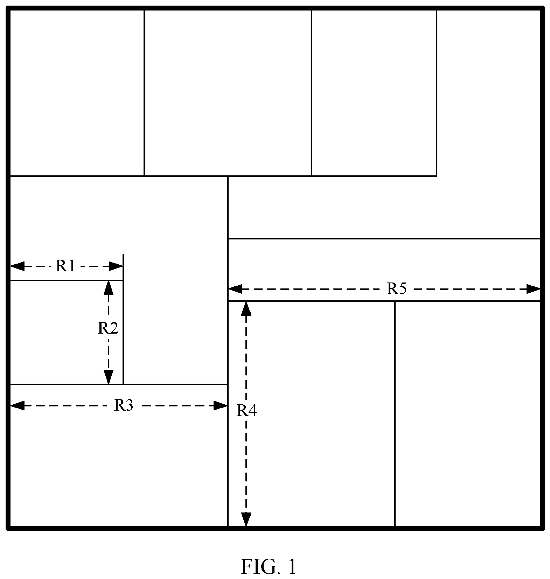

Referring to a schematic diagram of a road network shown in FIG. 1, line segments in the figure are road sections, such road sections R1 and R2, and crosspoints of the road sections in the figure are crossroads, such as a crosspoint of R1 and R2, and a crosspoint of R2 and R3.

(4) A path includes road sections of the foregoing road network. There is only one crossroad between any one of the road sections in the path and each neighboring road section. For example, in the road network shown in FIG. 1, a path may include R1, R2, and R3, or a path may include R3, R4, and R5.

(5) A map-matching technology is a technology of matching a measured location to a road section in a road network by using various conventional map-matching algorithms, that is, a technology of estimating a road section where a terminal device is located when the measured location is obtained through measurement.

The map-matching algorithm may be a map-matching algorithm based on a hidden Markov model (hidden Markov model, HMM).

(6) A timestamp of a measured location is a time at which a measurement device obtains the measured location through measurement.

(7) A corrected location of a measured location is obtained by a positioning correction apparatus by correcting the measured location.

(8) A terminal device, also referred to as user equipment (user equipment, UE) or a mobile terminal, is a device that provides voice and/or data connectivity to a user, such as a handheld device, a vehicle-mounted device, a wearable device, a computing device, and a mobile station (mobile station, MS) that have wireless connection functions, or other processing devices connected to a base station.

(9) A base station is a device that connects a terminal device to a wireless network, including but not limited to: an evolved node B (evolved node B, eNB), a radio network controller (radio network controller, RNC), a node B (Node B, NB), a base station controller (base station controller, BSC), a base transceiver station (base transceiver station, BTS), a home base station (for example, a home evolved NodeB or a home node B (home node B, HNB)), a baseband unit (baseband unit, BBU), an access point (access point, AP), or the like.

(10) A positioning server is a server providing positioning services for a terminal device in a network.

It should be noted that "a plurality of" in this application refers to two or more.

In addition, it should be understood that, in descriptions of this application, terms such as "first" and "second" are merely used for purposes of distinguishing descriptions and are neither intended to indicate or imply relative importance nor intended to indicate or imply a sequence.

The following briefly describes a map-matching algorithm based on an HMM in the embodiments of this application.

A principle in which a positioning correction apparatus matches a plurality of matching locations to a road network by using the map-matching algorithm based on the HMM is that the positioning correction apparatus limits a moving track generated by the plurality of matching locations to the road network, that is, the positioning correction apparatus determines, based on road section distribution in the road network and a physical location of each matching location, a target road section corresponding to each matching location.

When using the map-matching algorithm based on the HMM, the positioning correction apparatus needs to determine a radiation probability of each road section relative to each matching location in the road network, and a transition probability of road sections corresponding to two neighboring matching locations.

1. The radial probability of any one of the road sections relative to one matching location is a probability that the matching location corresponds to the road section, or a probability that the terminal device is moving on the road section when the measurement device obtains the matching location through measurement.

For example, a radiation probability of a road section $r_a$ relative to a matching location $Z_i$ can be recorded as $P(Z_i|r_a)$. The probability $P(Z_i|r_a)$ describes likelihood that the matching location $Z_i$ is on the road section $r_a$.

In an actual scenario, a farther distance between a road section and the matching location in the road network indicates a smaller probability that the terminal device is moving on the road section. Therefore, the radiation probability of the road section relative to the matching location is smaller. When a data error of the matching location is set to obey Gaussian distribution, the radiation probability of the road section $r_a$ relative to the matching location $Z_i$ can be expressed by using formula 1:

$$P(Z_i|r_a) = \frac{1}{\sqrt{2\pi}\sigma} e^{-\frac{dist(z_i, x_{i,a})^2}{2\sigma}} \qquad \text{Formula 1}$$

where $X_{i,a}$ is a projection point of $Z_i$ on $r_a$, $dist(Z_i, X_{i,a})$ is a distance between $Z_i$ and $X_{i,a}$, and $\sigma$ is a preset Gaussian distribution standard deviation.

2. The transition probability of any one of the road sections relative to a matching location is a probability that the terminal device transits from the target road section corresponding to the matching location to the road section.

In an actual scenario, the moving track of the terminal device between two matching locations is usually as close as possible to the shortest path between the two matching locations. The shortest distance between the two matching locations is a distance of a line segment whose end points are the two matching locations. Therefore, a greater difference between a route distance between two road sections that respectively correspond to the two matching locations and the shortest distance between the two matching locations indicates a lower transition probability of the two road sections.

For example, if a target road section corresponding to a matching location $Z_i$ is $r_a$, a to-be-selected road section corresponding to a next matching location $Z_{i+1}$ is $r_b$, the transition probability from $r_a$ corresponding to $Z_i$ to $r_b$ corresponding to $Z_{i+1}$ can be expressed by using formula 2:

$$P(r_b|r_a, Z_i, Z_{i+1}) = \frac{1}{\beta} e^{-\delta_i/\beta} \qquad \text{Formula 2}$$

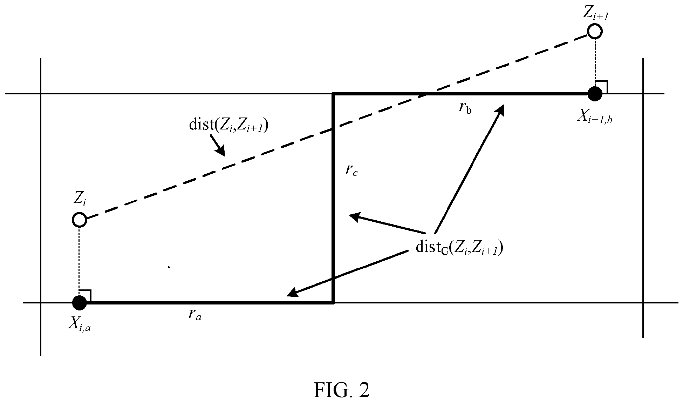

where $\delta_i = |dist(Z_i, Z_{i+1}) - dist_G(X_{i,a} X_{i+1,b})|$. As shown in FIG. 2, $X_{i,a}$ is a projection of $Z_i$ on the road section $r_a$, and $X_{i+1,b}$ is a projection of $Z_{i+1}$ on the road section $r_b$; the length of the dashed line in the figure is $dist(Z_i, Z_{i+1})$, that is, the shortest distance between $Z_i$ and $Z_{i+1}$; the length of the thick line in the figure is $dist_G(X_{i,a}, X_{i+1,b})$, that is, a distance between $X_{i,a}$ and $X_{i+1,b}$ along the moving path including $r_a$, $r_c$, and $r_b$ (or a route distance between $r_a$ and $r_b$ that respectively correspond to the two matching locations); and $\beta$ is a preset adjustable parameter.

Based on the above, after the positioning correction apparatus matches the plurality of matching locations Z1 to Zm to the road network by using the map-matching algorithm based on the HMM, the obtained target road section $R^* = r_1, r_2, ..., r_m$ corresponding to each matching location satisfies the following formula 3, where m is an integer greater than or equal to 2:

$$R^* = \mathrm{argmax}_R \, P(R|\mathcal{Z}) \qquad \text{Formula 3}.$$

Using the first-order Markov property of the Markov chain to expand P(R|Z), that is:

$$P(R|\mathcal{Z}) \propto P(\mathcal{Z}|R)P(R) = P(Z_1, Z_2, ..., Z_m|r_1, r_2, ..., r_m)P(r_1, r_2, ..., r_m)$$
$$= \prod P(Z_j|r_j) \prod P(r_{k+1}|r_k)$$

where J is a positive integer less than or equal to *m*, *k* is a positive integer less than *m*, $P(Z_j|r_j)$ is the radiation probability, and $P(r_{k+1}|r_k)$ is the transition probability. A road section sequence *R* can be obtained by using the foregoing formula, so that the posterior probability of the whole sequence is maximum.

After performing map matching by using the map-matching algorithm based on the HMM, the positioning correction apparatus can obtain the target road sections corresponding to the plurality of matching locations.

The following describes the embodiments of this application in detail with reference to the accompanying drawings.

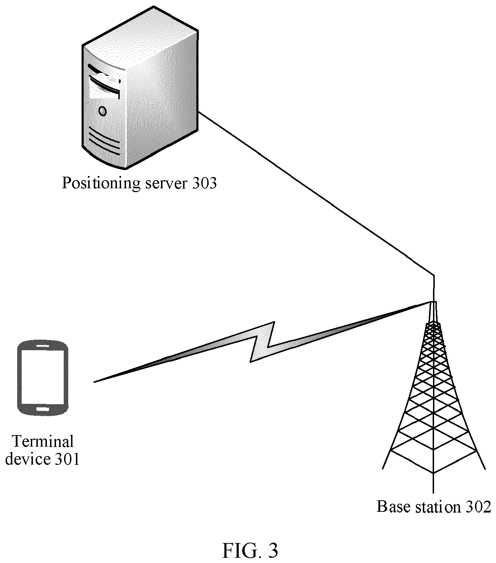

FIG. 3 is an architectural diagram of a positioning service system to which a positioning correction method is applicable according to an embodiment of this application. Referring to FIG. 3, the system includes a terminal device 301 and a base station 302.

The terminal device 301 is a device that accesses a network through the base station 302.

The base station 302 is responsible for providing wireless access related services to the terminal device 301, to implement a radio physical layer function, a resource scheduling and radio resource management function, a quality of service (Quality of Service, QoS) management function, a wireless access control function, and a mobility management function.

The terminal device 301 and the base station 302 are interconnected through a Uu interface, to implement communication between the terminal device 301 and the base station 302.

In a process in which the system determines a measured location of the terminal device 301 by using a base station positioning technology, the base station 302 sends a reference signal to the terminal device 301, and the terminal device 301 receives the reference signal of the base station 302 and determines measurement information such as TDOAor signal strength of the reference signal. The terminal device 301 or the base station 302 may be used as a measurement device, to obtain the measured location of the terminal device 301 through calculation based on the foregoing measurement information.

When the measurement device is the terminal device 301, the terminal device can directly determine the measured location of the terminal device 301 based on the determined measurement information. When the measurement device is the base station 302, the base station 302 obtains the measurement information from the terminal device 301, and determines the measured location of the terminal device 301 based on the obtained measurement information.

After the measurement device in the system determines the measured location of the terminal device 301, the measured location needs to be corrected by a positioning correction apparatus having a positioning correction function. In a scenario in which the terminal device 301 has the positioning correction function (for example, the terminal device 301 is the positioning correction apparatus) and the terminal device 301 is the measurement device, the terminal device 301 may correct the determined measured location.

In a scenario in which the terminal device 301 has the positioning correction function and the base station 302 is the measurement device, the terminal device 301 may obtain the measured location from the base station 302, and correct the obtained measured location.

In a scenario in which the base station 302 has the positioning correction function (for example, the base station 302 is the positioning correction apparatus) and the terminal device 301 is the measurement device, the base station 302 may obtain the measured location from the terminal device, and correct the obtained measured location.

In a scenario in which the base station 302 has the positioning correction function and the base station 302 is the measurement device, the base station 302 may directly correct the determined measured location.

When neither the base station 302 nor the terminal device 301 has the positioning correction function, the system may further include a positioning server 303 having the positioning correction function. The positioning server 303 is a server providing positioning services to the terminal device 301, and in the system, the positioning server 303 can be used as a positioning correction apparatus to correct the measured location.

In a scenario in which the terminal device 301 is used as the measurement device, the positioning server 303 can forward and obtain the measured location determined by the terminal device 301 through the base station 302, and correct the obtained measured location.

In a scenario in which the base station 302 is used as the measurement device, the positioning server 303 can obtain the measured location determined by the base station 302 from the base station 302, and correct the obtained measured location.

It should be noted that a person skilled in the art may understand that, the architectural diagram of the positioning service system shown in FIG. 3 does not constitute a limitation to the positioning service system to which the positioning correction method is applicable. The positioning correction method provided in the embodiments of this application may be further applicable to other positioning service systems. This is not limited in this application.

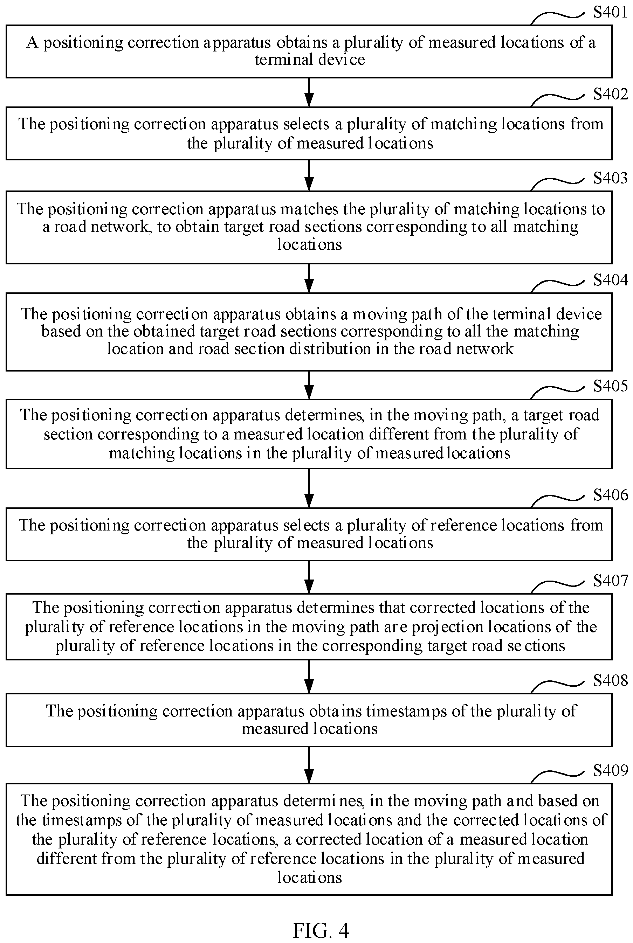

An embodiment of this application provides a positioning correction method, and the method can be applied to the positioning correction apparatus in the positioning service system shown in FIG. 3. Referring to FIG. 4, a procedure of the method includes the following steps.

S401: A positioning correction apparatus obtains a plurality of measured locations of a terminal device, where any one of the measured locations is a physical location of the terminal device that is obtained by a measurement device by performing positioning measurement on the terminal device, and the measurement device is the terminal device or a base station.

The positioning correction apparatus may obtain the plurality of measured locations in, but not limited to, the following manners.

Manner 1: When the positioning correction apparatus is the measurement device, the positioning correction apparatus can directly obtain the measured location that is obtained by measurement.

Manner 2: When the positioning correction apparatus is a positioning server and the measurement device is the terminal device, the positioning correction apparatus obtains the plurality of measured locations through the following steps:

measuring, by the terminal device, the plurality of measured locations; sending, by a base station that serves the terminal device, the plurality of measured locations to the positioning correction apparatus; and obtaining, by the positioning correction apparatus, the plurality of measured locations sent by the base station.

Manner 3: When the positioning correction apparatus is the base station and the measurement device is the terminal device, the positioning correction apparatus obtains the plurality of measured locations sent by the terminal device.

Manner 4: When the positioning correction apparatus is a positioning server and the measurement device is the base station, the positioning correction apparatus obtains the plurality of measured locations sent by the base station.

Manner 5: When the positioning correction apparatus is the terminal device and the measurement device is the base station, the positioning correction apparatus obtains the plurality of measured locations sent by the base station.

S402: The positioning correction apparatus selects a plurality of matching locations from the plurality of measured locations.

The positioning correction apparatus can select the plurality of matching locations through the following steps:

connecting, by the positioning correction apparatus, every two neighboring measured locations in the plurality of measured locations, to obtain a moving track of the terminal device; and

removing, by the positioning correction apparatus based on the smoothness of the moving track, measured locations that cause the moving track to be unsmooth, and selecting some or all of the remaining measured locations as the matching locations; or determining, by the positioning correction apparatus, an included angle between a moving track between every two neighboring measured locations and a crossroad section, and selecting measured locations that correspond to an included angle less than a specified angle as the matching locations, where the crossroad section is a road section crossing the moving track in the road network.

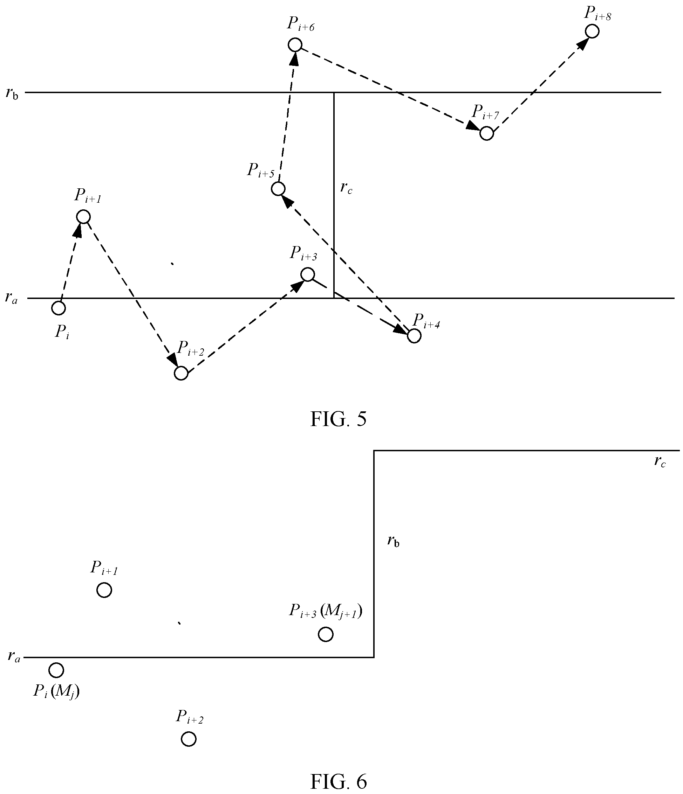

Example 1: As shown in FIG. 5, the positioning correction apparatus can connect every two neighboring measured locations of nine measured locations Pi to Pi+8 through a dashed line, to form the moving track; and then the positioning correction apparatus removes, based on the smoothness of the moving track, Pi+1 and Pi+4, and selects the matching locations from the remaining measured locations; or the positioning correction apparatus selects measured locations that correspond to an included angle that is between a moving track and a crossroad section and that is less than the specified angle, that is, four measured locations Pi+3, Pi+4, Pi+6, and Pi+7, and selects some or all of the four measured locations as the matching locations.

The positioning correction apparatus can screen out, in the foregoing manner, measured locations that have fewer errors with the actual location of the terminal device as the matching locations, so that accuracy of subsequently determining, by the positioning correction apparatus, a target road section corresponding to each matching location can be ensured.

Alternatively, the positioning correction apparatus can select one measured location as the matching location every specified quantity of measured locations. Still using the nine measured locations in FIG. 5 as an example, when the specified quantity is 4, the positioning correction apparatus can select Pi and Pi+5 as the matching locations.

Alternatively, the positioning correction apparatus randomly selects a specified quantity of matching locations from the plurality of measured locations.

The positioning correction apparatus can also select a plurality of matching locations from the plurality of measured locations according to a conventional moving track filtering rule. This is not limited in this application.

It should be noted that, when the plurality of matching locations selected by the positioning correction apparatus do not include the initial measured location and the last measured location, target road sections corresponding to all matching locations determined by the positioning correction apparatus in S403 are likely not to include a target road section corresponding to the initial measured location and a target road section corresponding to the last measured location, which results in that when the positioning correction apparatus determines the moving path of the terminal device based on the target road sections corresponding to the matching locations, the moving path does not include the target road section corresponding to the initial measured location and the target road section corresponding to the last measured location. Therefore, to avoid the foregoing case, when performing S402, the positioning correction apparatus selects the initial measured location and the last measured location in the plurality of measured locations as the matching locations.

S403: The positioning correction apparatus matches the plurality of matching locations to a road network, to obtain the target road sections corresponding to all the matching locations. As shown in FIG. 1, the road network is a road section set including a plurality of crossing road sections in different directions.

When performing S403, the positioning correction apparatus can match the plurality of matching locations to the road network by using a plurality of map-matching algorithms (for example, the map-matching algorithm based on the HMM), to obtain the target road sections corresponding to all the matching locations in the road network.

According to the foregoing method, the positioning correction apparatus can improve accuracy of determining a target road section corresponding to each matching location.

S404: The positioning correction apparatus obtains a moving path of the terminal device based on the obtained target road section corresponding to each matching location and road section distribution in the road network. Road sections forming the moving path includes at least the obtained target road sections corresponding to all the matching locations.

Example 2: When the positioning correction apparatus determines, in the road network shown in FIG. 1, that the target road sections corresponding to the plurality of matching locations are R1, R3, and R4, it can be learned from the distribution in the road network that the road sections R1 and R3 can only be connected through R2, and there is a crossroad between R3 and R4. Therefore, the positioning correction apparatus can determine, based on R1, R3, and R4 and the road section distribution in the road network, that the moving path of the terminal device includes R1, R2, R3, and R4, that is, the moving path may be R1-R2-R3-R4.

Through the foregoing step, the moving path determined by the positioning correction apparatus can be ensured to conform to the road section distribution in the road network.

S405: The positioning correction apparatus determines, in the moving path, a target road section corresponding to a measured location different from the plurality of matching locations in the plurality of measured locations.

Optionally, the positioning correction apparatus can perform S405 through the following steps:

determining two matching locations neighboring the left side and the right side of a first measured location, where the first measured location is a measured location different from the plurality of matching locations in the plurality of measured locations;

determining one or more to-be-selected road sections between the two matching locations in the moving path; and

using the to-be-selected road section as a target road section corresponding to the first measured location, when there is one determined to-be-selected road section; or

selecting a target road section corresponding to the first measured location from the plurality of to-be-selected road sections, when there are a plurality of determined to-be-selected road sections, where a first distance between the first measured location and a first projection location is less than a second distance between the first measured location and a second projection location, the first projection location is a projection location of the first measured location in the selected target road section, and the second projection location is a projection location of the first measured location in any to-be-selected road section different from the selected target road section in the plurality of to-be-selected road sections.

Example 3: As shown in FIG. 6, Pi and Pi+3 are two neighboring matching locations Mj and Mj+1, target road sections corresponding to Pi and Pi+3 are both ra, and the positioning correction apparatus determines that the moving path of the terminal device is ra-rb-rc. When the positioning correction apparatus determines, in the moving path, a target road section corresponding to a measured location Pi+1 between Pi and Pi+3, because a to-be-selected road section between Pi and Pi+3 is ra, and there is no other to-be-selected road sections, the target road section corresponding to Pi+1 is also ra.

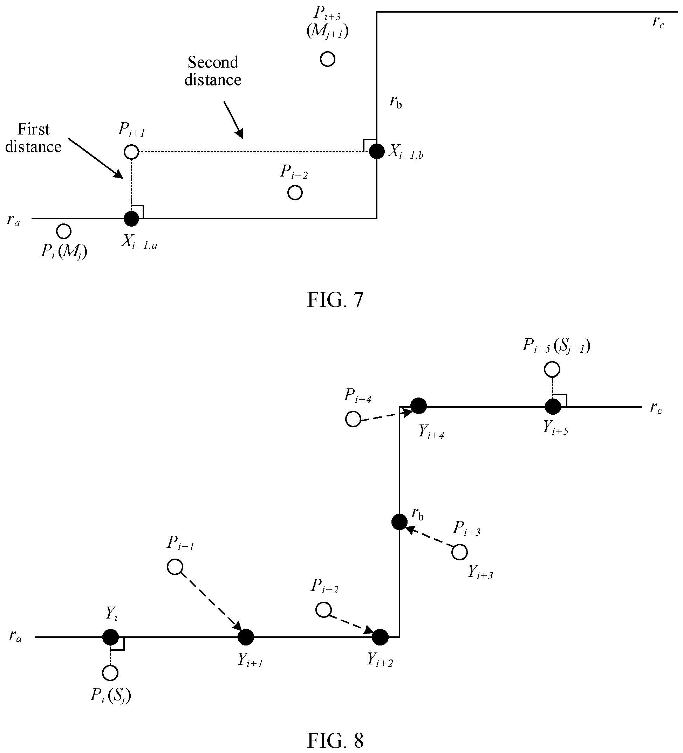

Example 4: As shown in FIG. 7, Pi and Pi+3 are two neighboring matching locations Mj and Mj+1, target road sections corresponding to Pi and Pi+3 are ra and rb respectively, and the positioning correction apparatus determines that the moving path of the terminal device is ra-rb-rc. When the positioning correction apparatus determines, in the moving path, a target road section corresponding to a measured location Pi+1 between Pi and Pi+3, to-be-selected road sections between Pi and Pi+3 are ra and rb. Therefore, as shown in the figure, the positioning correction apparatus needs to separately project Pi+1 in ra and rb, to determine projection locations Xi+1,a and Xi+1,b of Pi+1 in ra and rb. Then, the positioning correction apparatus determines a distance between Pi+1 and the projection location Xi+1,a and Xi+1,b of Pi+1 in ra and rb, and selects, from the projection locations, the projection location Xi+1,a that has a smaller distance to Pi+1. Finally, the positioning correction apparatus can determine that the road section ra in which Xi+1,a is located is the target road section corresponding to Pi+1.

In an actual application, a smaller distance between a measured location and a road section indicates a greater probability that an actual location of the terminal device is on the road section when the measured location is obtained through measurement. Therefore, according to the foregoing method, accuracy of determining, by the positioning correction apparatus, target road sections corresponding to measured locations between two neighboring matching locations can be improved.

S406: The positioning correction apparatus selects a plurality of reference locations from the plurality of measured locations, where a distance between any one of the reference locations and a projection location of the reference location in the corresponding target road section is less than a specified threshold.

In an actual application, a smaller distance between a measured location and a road section indicates a greater probability that an actual location of the terminal device is on the road section when the measured location is obtained through measurement. Therefore, through the foregoing step, the positioning correction apparatus can select the plurality of reference locations based on the distance between the measured location and the corresponding target road section, thereby ensuring a greater probability that the actual location of the terminal device is on the corresponding target road section when the reference location is obtained through measurement.

In S406, the specified threshold can be specifically set according to an actual scenario and application, for example, 40 meters (m), 45 m, 50 m, 60 m, and the like. This is not limited in this application.

A smaller distance between a measured location and the corresponding target road section indicates a greater probability that the actual location of the terminal device is on target road section when the measured location is obtained through measurement. Therefore, a smaller specified threshold can ensure a greater probability that the actual location of the terminal device is on the corresponding target road section when the reference location selected by the positioning correction apparatus is obtained through measurement. However, due to low positioning accuracy of the base station positioning technology, if the positioning correction apparatus sets the specified threshold to a smaller value, for example, 10 m, the quantity of the reference locations selected by the positioning correction apparatus is greatly reduced, and this is not facilitated for correcting the measured locations subsequently. On the contrary, if the positioning correction apparatus sets the specified threshold to a larger value, for example, 70 m, the confidence of the reference locations selected by the positioning correction apparatus is lower, that is, the probability that the actual location of the terminal device is on the corresponding target road section when the reference location is obtained through measurement is lower.

Based on the above, in this embodiment of this application, the specified threshold can be approximately set to 40 m with reference to the positioning accuracy in the base station positioning technology and the impact on the subsequent positioning correction.

S407: The positioning correction apparatus determines that corrected locations of the plurality of reference locations in the moving path are projection locations of the plurality of reference locations in the corresponding target road sections.

A distance between the reference location selected by the positioning correction apparatus and the projection location of the corresponding target path is less than the specified threshold. Therefore, through the foregoing step, an error between the corrected location of the reference location that is determined by the positioning correction apparatus and the actual location of the terminal device is relatively small, and the method can improve the confidence of the determined corrected location of the reference location.

S408: The positioning correction apparatus obtains timestamps of the plurality of measured locations, where the timestamp of any one of the measured locations is a time at which the measured location is obtained through measurement.

Usually, when obtaining each measured location through measurement, the measurement device correspondingly generates a timestamp of the measured location, to record the time at which the terminal device is measured in the measured location.

Optionally, the positioning correction apparatus can obtain the timestamps of the plurality of measured locations in the same manner in which the positioning correction apparatus obtains the plurality of measured locations in S401. Therefore, for the manner in which the positioning correction apparatus obtains the timestamps of the plurality of measured locations, refer to the description in S401, and the details are not described herein again.

In addition, optionally, the positioning correction apparatus can perform S401 and S408 at the same time, or perform S401 and S408 at different times. This is also not limited in this embodiment of this application.

S409: The positioning correction apparatus determines, in the moving path and based on the timestamps of the plurality of measured locations and the corrected locations of the plurality of reference locations, a corrected location of a measured location different from the plurality of reference locations in the plurality of measured locations.

The positioning correction apparatus cannot determine a speed of the terminal device when the terminal device moves in the moving path. However, in the process of correcting the measured locations, the terminal device can be considered to move at a constant speed in a time period during which the two neighboring reference locations are obtained through measurement. Therefore, the terminal device can determine, based on an average speed of the terminal device in the time period, the timestamps of the two neighboring reference locations, and the timestamps of the measured locations between the two neighboring reference locations, the corrected locations of the measured locations between the two neighboring reference locations. For example, the positioning correction apparatus can perform S409 by using, but not limited to, the following two methods.

Method 1:

determining, by the positioning correction apparatus, two reference locations neighboring the left side and the right side of a second measured location, where the second measured location is a measured location different from the plurality of reference locations in the plurality of measured locations;
determining, by the positioning correction apparatus, a total distance between a first corrected location and a second corrected location along the moving path, where the first corrected location is a corrected location of a first reference location in the two reference locations, and the second corrected location is a corrected location of a second reference location in the two reference locations;
determining, by the positioning correction apparatus, total duration between timestamps of the two reference locations;
calculating, by the positioning correction apparatus based on the total distance and the total duration, an average speed of the terminal device moving from the first corrected location to the second corrected location along the moving path, where the average speed satisfies the following formula: the average speed = the total distance/the total duration;
determining, by the positioning correction apparatus, relative duration between a timestamp of the second measured location and a timestamp of the first reference location;

determining, by the positioning correction apparatus, a relative moving distance of the terminal device based on the average speed and the relative duration, where the relative moving distance satisfies the following formula: the relative moving distance = the average speed * the relative duration;

determining, by the positioning correction apparatus, a corrected location of the second measured location in the moving path based on the relative moving distance, where a distance between the first corrected location and the corrected location of the second measured location along the moving path is the relative moving distance.

Method 2:

determining, by the positioning correction apparatus, two neighboring reference locations and a total distance between a first corrected location and a second corrected location along the moving path, where the first corrected location is a corrected location of a first reference location in the two reference locations, and the second corrected location is a corrected location of a second reference location in the two reference locations;

determining, by the positioning correction apparatus, total duration between timestamps of the two reference locations;

calculating, by the positioning correction apparatus based on the total distance and the total duration, an average speed of the terminal device moving from the first corrected location to the second corrected location along the moving path;

determining, by the positioning correction apparatus, a corrected location of a first measured location by using the following steps, where the first measured location is a measured location neighboring the first reference location in the measured locations between the two reference locations:

determining, by the positioning correction apparatus, first relative duration between a timestamp of the first measured location and a timestamp of the first reference location; determining, by the positioning correction apparatus, a first relative moving distance of the terminal device based on the average speed and the first relative duration; determining, by the positioning correction apparatus along the moving path, a location that has the first relative moving distance to the first corrected location; and determining, by the positioning correction apparatus, that the location is a corrected location of the first measured location;

determining, by the positioning correction apparatus, a corrected location of a second measured location by using the following steps, where the second measured location is a measured location neighboring the first measured location in the measured locations between the two reference locations:

determining, by the positioning correction apparatus, second relative duration between a timestamp of the second measured location and the timestamp of the first measured location; determining, by the positioning correction apparatus, a second relative moving distance of the terminal device based on the average speed and the second relative duration; determining, by the positioning correction apparatus along the moving path, a location that has the second relative moving distance to the corrected location of the first measured location; and determining, by the positioning correction apparatus, that the location is a corrected location of the second measured location; and

using, by the positioning correction apparatus, the foregoing method until corrected locations of all measured locations between the two reference locations are determined.

Example 5: As shown in FIG. 8, in six measured locations Pi to Pi+5, Pi and Pi+5 are respectively two neighboring reference locations Sj and Sj+1. A target road section corresponding to Pi is ra. Therefore, Yi in the figure is a corrected location of Pi. A target road section corresponding to Pi+5 is rc. Therefore, Yi+5 in the figure is a corrected location of Pi+5. The moving path of the terminal device determined by the positioning correction apparatus includes ra-rb-rc. Timestamps of Pi to Pi+5 are T.Pi, T.Pi+1, T.Pi+2, T.Pi+3, T.Pi+4, and T.Pi+5.

When the positioning correction apparatus determines the corrected locations of the measured locations between the two neighboring reference locations by using the method 1,

the positioning correction apparatus determines a total distance L between a corrected location Yi of Pi and a corrected location Yi+5 of Pi+5 and total duration T=T.Pi+5-T.Pi between a timestamp of Pi and a timestamp of Pi+5, to determine an average speed v=L/T of the terminal device moving from Yi to Yi+5 along the moving path;

the positioning correction apparatus determines relative duration $\Delta t1$=T.Pi+1-T.Pi between a timestamp of Pi+1 and the timestamp of Pi;

the positioning correction apparatus determines a relative moving distance $\Delta L1$=v*$\Delta t1$, and determines that a location that is $\Delta L1$ from Yi along the moving path is a corrected location Yi+1 of Pi+1;

the positioning correction apparatus determines relative duration $\Delta t2$=T.Pi+2-T.Pi between a timestamp of Pi+2 and the timestamp of Pi;

the positioning correction apparatus determines a relative moving distance $\Delta L2 = v^* \Delta t2$, and determines that a location that is $\Delta L2$ from Yi along the moving path is the corrected location Yi+1 of Pi+1; and

the positioning correction apparatus uses the foregoing method until a corrected location Yi+4 of Pi+4 is determined.

According to the foregoing method, the positioning correction apparatus can determine the corrected locations of the measured locations between the two neighboring reference locations.

In the foregoing two methods, the positioning correction apparatus can determine corrected locations of measured locations neighboring the left side and the right side of two reference locations. However, when the plurality of reference locations selected by the positioning correction apparatus do not include the initial measured location and/or the last measured location, the positioning correction apparatus cannot determine a corrected location of a measured location before the initial reference location and/or a corrected location of a measured location after the last reference location by using the foregoing two methods.

In this case, the positioning correction apparatus may not perform correction on the foregoing measured locations, or directly uses projection locations of the measured locations on the corresponding target road sections as the corrected locations of the measured locations.

Optionally, when the positioning correction apparatus determines a corrected location of any measured location before the initial reference location, a first speed of the terminal device moving from the corrected location of the measured location to a corrected location of the initial reference location can be considered to be the same as a second speed, where the second speed is an average speed of the terminal device moving from the corrected location of the initial reference location to a corrected location of the second reference location along the moving path. In this way, the positioning correction apparatus can determine the corrected location of the measured location based on a timestamp of the measured location, a timestamp of the initial reference location, and the first speed.

Similarly, when the positioning correction apparatus determines a corrected location of any measured location after the last reference location, a third speed of the terminal device moving from a corrected location of the last reference location to the corrected location of the measured location can be considered to be the same as a fourth speed, where the fourth speed is an average speed of the terminal device moving from a corrected location of the penultimate reference location to the corrected location of the last reference location along the moving path. In this way, the positioning correction apparatus can determine the corrected location of the measured location based on a timestamp of the measured location, a timestamp of the last reference location, and the third speed.

According to the method provided in this embodiment of this application, the positioning correction apparatus determines the moving path of the terminal device; and determines, in the moving path, the target road sections corresponding to the plurality of measured locations of the terminal device, where the measured location is obtained through measurement by using a base station positioning technology. The apparatus selects, from the plurality of measured locations, a measured location whose distance to a projection location of a corresponding target path is less than the specified threshold as a reference location. The apparatus determines, in the moving path, that corrected locations of the plurality of reference locations are projection locations of the plurality of reference locations in the corresponding target road sections. The apparatus determines, based on timestamps of the plurality of measured locations and the corrected locations of the plurality of reference locations, a corrected location of a measured location different from the plurality of reference locations in the moving path. According to the foregoing solution, the apparatus can determine a corrected location of each measured location in the moving path, to correct the positioning track obtained based on the base station positioning technology. In addition, in the foregoing solution, a distance between the reference location selected by the apparatus and the projection location of the corresponding target path is less than the specified threshold. Therefore, an error between the corrected location of the reference location that is determined by the apparatus and the actual location of the terminal device is relatively small, that is, the apparatus can improve confidence of the determined corrected location of the reference location, thereby improving confidence of a corrected location of another measured location that is determined based on the corrected location of the reference location. Obviously, according to the foregoing solution, positioning track data generated based on the base station positioning technology can be corrected and confidence and accuracy of the determined corrected location can be improved.

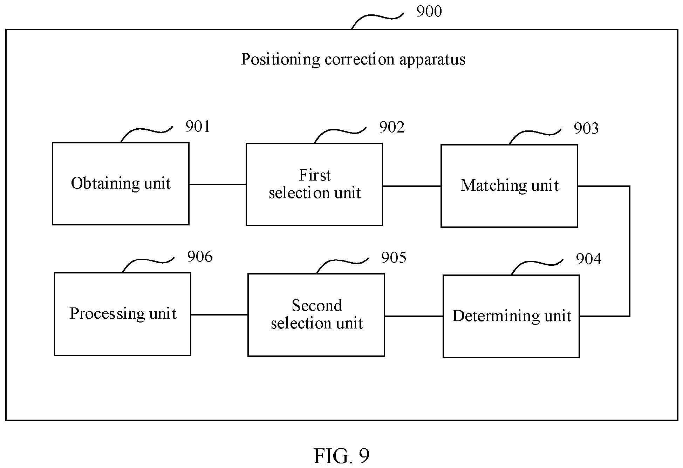

Based on the foregoing embodiments, an embodiment of this application further provides a positioning correction apparatus. The positioning correction apparatus can be applied to the terminal device, the base station, or the positioning server in the positioning service system shown in FIG. 3, to implement the positioning correction method shown in FIG. 4. Referring to FIG. 9, the positioning correction apparatus 900 includes: an obtaining unit 901, a first selection unit 902, a matching unit 903, a determining unit 904, a second selection unit 905, and a processing unit 906.

The obtaining unit 901 is configured to obtain a plurality of measured locations of a terminal device, where any one of the measured locations is a physical location of the terminal device that is obtained by a measurement device by performing positioning measurement on the terminal device, and the measurement device is the terminal device or a base station.

The first selection unit 902 is configured to select a plurality of matching locations from the plurality of measured locations.

The matching unit 903 is configured to match the plurality of matching locations to a road network, to obtain a target road section corresponding to each matching location, where the road network is a road section set including a plurality of crossing road sections in different directions; and
obtain a moving path of the terminal device based on the obtained target road section corresponding to each matching location and road section distribution in the road network, where road sections forming the moving path include at least the obtained target road section corresponding to each matching location.

The determining unit 904 is configured to determine, in the moving path, a target road section corresponding to a measured location different from the plurality of matching locations in the plurality of measured locations.

The second selection unit 905 is configured to select a plurality of reference locations from the plurality of measured locations, where a distance between any one of the reference locations and a projection location of the reference location in the corresponding target road section is less than a specified threshold.

The processing unit 906 is configured to: determine that corrected locations of the plurality of reference locations in the moving path are projection locations of the plurality of reference locations in the corresponding target road sections; obtain timestamps of the plurality of measured locations, where the timestamp of any one of the measured locations is a time at which the measured location is obtained through measurement; and determine, in the moving path and based on the timestamps of the plurality of measured locations and the corrected locations of the plurality of reference locations, a corrected location of a measured location different from the plurality of reference locations in the plurality of measured locations.

When obtaining the plurality of measured locations of the terminal device, the obtaining unit 901 is specifically configured to obtain the plurality of measured locations sent by the base station.

When matching the plurality of matching locations to the road network, to obtain the target road section corresponding to each matching location in the road network, the matching unit 903 may be specifically configured to match the plurality of matching locations to the road network by using a map-matching algorithm based on a hidden Markov model HMM, to obtain the target road section corresponding to each matching location in the road network.

Optionally, the plurality of matching locations include the initial measured location and the last measured location in the plurality of measured locations.

When determining, in the moving path, the target road section corresponding to the measured location different from the plurality of matching locations in the plurality of measured locations, the determining unit 904 may be specifically configured to:

determine two matching locations neighboring the left side and the right side of a first measured location, where the first measured location is a measured location different from the plurality of matching locations in the plurality of measured locations; determine one or more to-be-selected road sections between the two matching locations in the moving path; and use the to-be-selected road section as a target road section corresponding to the first measured location, when there is one determined to-be-selected road section; or
select a target road section corresponding to the first measured location from the plurality of to-be-selected road sections, when there are a plurality of determined to-be-selected road sections, where a first distance between the first measured location and a first projection location is less than a second distance between the first measured location and a second projection location, the first projection location is a projection location of the first measured location in the selected target road section, and the second projection location is a projection location of the first measured location in any to-be-selected road section different from the selected target road section in the plurality of to-be-selected road sections.

When determining, in the moving path and based on the timestamps of the plurality of measured locations and the corrected locations of the plurality of reference locations, the corrected location of the measured location different from the plurality of reference locations in the plurality of measured locations, the processing unit 906 may be specifically configured to:

determine two reference locations neighboring the left side and the right side of a second measured location, where the second measured location is a measured location different from the plurality of reference locations in the plurality of measured locations;
determine a total distance between a first corrected location and a second corrected location along the moving path, where the first corrected location is a corrected location of a first reference location in the two reference locations, and the second corrected location is a corrected location of a second reference location in the two reference locations;
determine total duration between timestamps of the two reference locations; calculate, based on the total distance and the total duration, an average speed of the terminal device moving from the first corrected location to the second corrected location along the moving path;
determine relative duration between a timestamp of the second measured location and a timestamp of the first reference location; determine a relative moving distance of the terminal device based on the average speed and the relative duration; and determine a corrected location of the second measured location in the moving path based on the relative moving distance, where a distance between the first corrected location and the corrected location of the second measured location along the moving path is the relative moving distance.

This embodiment of this application provides a positioning correction apparatus, and the error between the corrected location of the reference location that is determined by the apparatus and an actual location of the terminal device is relatively small, that is, the apparatus can improve confidence of the determined corrected location of the reference location, thereby improving confidence of a corrected location of another measured location that is determined based on the corrected location of the reference location. Obviously, according to the foregoing solution, positioning track data generated based on the base station positioning technology can be corrected and confidence and accuracy of the determined corrected location can be improved.

It should be understood that, division of the units in the positioning correction apparatus is merely logical function division. During actual implementation, all or some of the units may be integrated into one physical entity, or the units may be physically separate. In addition, the units can all be implemented in a form of software invoked by a processing element or in a form of hardware; or some units may be implemented in the form of software invoked by a processing element and some units are implemented in the form of hardware. For example, the processing unit in the positioning correction apparatus may be a separate processing element, or may be integrated in a chip of the positioning correction apparatus for implementation. In addition, the processing unit may alternatively be stored in the memory of the positioning correction apparatus in a form of a program, and a processing element of the positioning correction apparatus invokes and performs the functions of the unit. The implementation of other units is similar. In addition, the units may be integrated together or may be individually implemented. The processing element herein may be an integrated circuit and has a signal processing capability. In an implementation process, steps in the foregoing methods or the foregoing units can be implemented by using a hardware integrated logical circuit in the processing element, or by using instructions in a form of software.

For example, the foregoing units may be configured as one or more integrated circuits for implementing the foregoing methods, such as one or more application-specific integrated circuits (application specific integrated circuit, ASIC), one or more microprocessors (digital signal processor, DSP), or one or more field programmable gate arrays (field programmable gate array, FPGA). For another example, when one of the foregoing units is implemented by a processing element invoking a program, the processing element may be a general-purpose processor, such as a central processing unit (Central Processing Unit, CPU) or another processor that can invoke a program. For another example, the units can be integrated together and implemented in a form of a system-on-a-chip (system-on-a-chip, SOC).

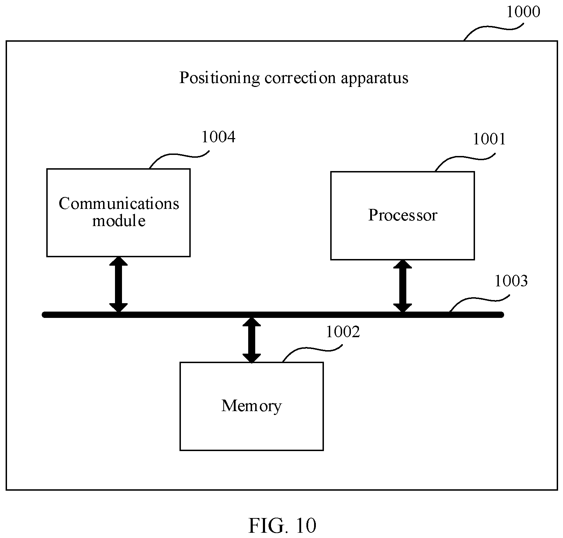

Based on the foregoing embodiments, an embodiment of this application further provides a positioning correction apparatus. The positioning correction apparatus can be applied to the terminal device, the base station, or the positioning server in the positioning service system shown in FIG. 3, to implement the positioning correction method shown in FIG. 4, and has the functions of the positioning correction apparatus 900 shown in FIG. 9. Referring to FIG. 10, the positioning correction apparatus 1000 includes a processor 1001 and a memory 1002. The processor 1001 and the memory 1002 are interconnected.

The processor 1001 and the memory 1002 are interconnected through a bus 1003. The bus 1003 may be a peripheral component interconnect (peripheral component interconnect, PCI) bus, an extended industry standard architecture (extended industry standard architecture, EISA) bus, and or the like. The bus 1003 may be classified into an address bus, a data bus, a control bus, and the like. For ease of representation, only one thick line is used to represent the bus in FIG. 10, but this does not mean that there is only one bus or only one type of bus.

The positioning correction apparatus 1000 can further include a communications module 1004, configured to receive and send data, to communicate with other devices in the positioning service system. The communications module 1004 may be a transceiver or a communications interface. For example, when the positioning correction apparatus 1000 is a terminal device or a base station, the communications module 1004 is the transceiver. For another example, when the positioning correction apparatus 1000 is a positioning server, the communications module 1004 is the communications interface.

The processor 1001 may be specifically configured to:

obtain a plurality of measured locations of a terminal device, where any one of the measured locations is a physical location of the terminal device that is obtained by a measurement device by performing positioning measurement on the terminal device, and the measurement device is the terminal device or a base station; select a plurality of matching locations from the plurality of measured locations;
match the plurality of matching locations to a road network, to obtain a target road section corresponding to each matching location, where the road network is a road section set including a plurality of crossing road sections in different directions;

obtain a moving path of the terminal device based on the obtained target road section corresponding to each matching location and road section distribution in the road network, where road sections forming the moving path include at least the obtained target road section corresponding to each matching location;

determine, in the moving path, a target road section corresponding to a measured location different from the plurality of matching locations in the plurality of measured locations;

select a plurality of reference locations from the plurality of measured locations, where a distance between any one of the reference locations and a projection location of the reference location in the corresponding target road section is less than a specified threshold;

determine that corrected locations of the plurality of reference locations in the moving path are projection locations of the plurality of reference locations in the corresponding target road sections;

obtain timestamps of the plurality of measured locations, where the timestamp of any one of the measured locations is a time at which the measured location is obtained through measurement; and

determine, in the moving path and based on the timestamps of the plurality of measured locations and the corrected locations of the plurality of reference locations, a corrected location of a measured location different from the plurality of reference locations in the plurality of measured locations.

Optionally, when obtaining the plurality of measured locations of the terminal device, the processor 1001 is specifically configured to:

obtain the plurality of measured locations sent by the base station.

Optionally, when matching the plurality of matching locations to the road network, to obtain the target road section corresponding to each matching location in the road network, the processor 1001 is specifically configured to:

match the plurality of matching locations to the road network by using a map-matching algorithm based on a hidden Markov model HMM, to obtain the target road section corresponding to each matching location in the road network.

Optionally, the plurality of matching locations include the first measured location and the last measured location in the plurality of measured locations, and when determining, in the moving path, the target road section corresponding to the measured location different from the plurality of matching locations in the plurality of measured locations, the processor 1001 is specifically configured to:

determine two matching locations neighboring the left side and the right side of a first measured location, where the first measured location is a measured location different from the plurality of matching locations in the plurality of measured locations;

determine one or more to-be-selected road sections between the two matching locations in the moving path; and

use the to-be-selected road section as a target road section corresponding to the first measured location, when there is one determined to-be-selected road section; or

select a target road section corresponding to the first measured location from the plurality of to-be-selected road sections, when there are a plurality of determined to-be-selected road sections, where a first distance between the first measured location and a first projection location is less than a second distance between the first measured location and a second projection location, the first projection location is a projection location of the first measured location in the selected target road section, and the second projection location is a projection location of the first measured location in any to-be-selected road section different from the selected target road section in the plurality of to-be-selected road sections.

Optionally, when determining, in the moving path and based on the timestamps of the plurality of measured locations and the corrected locations of the plurality of reference locations, the corrected location of the measured location different from the plurality of reference locations in the plurality of measured locations, the processor 1001 is specifically configured to:

determine two reference locations neighboring the left side and the right side of a second measured location, where the second measured location is a measured location different from the plurality of reference locations in the plurality of measured locations;

determine a total distance between a first corrected location and a second corrected location along the moving path, where the first corrected location is a corrected location of a first reference location in the two reference locations, and the second corrected location is a corrected location of a second reference location in the two reference locations;

determine total duration between timestamps of the two reference locations;

calculate, based on the total distance and the total duration, an average speed of the terminal device moving from the first corrected location to the second corrected location along the moving path;

determine relative duration between a timestamp of the second measured location and a timestamp of the first reference location;

determine a relative moving distance of the terminal device based on the average speed and the relative duration; and determine a corrected location of the second measured location in the moving path based on the relative moving distance, where a distance between the first corrected location and the corrected location of the second measured location along the moving path is the relative moving distance.

The memory 1002 is configured to store program instructions and the like. Specifically, the program instructions may include program code, where the program code includes a computer operation instruction. The memory 1002 may include a random access memory (random access memory, RAM), or may be a non-volatile memory (non-volatile memory), for example, at least one magnetic disk memory. The processor 1001 executes the program instructions stored in the memory 1002 to implement the foregoing functions, thereby implementing the positioning correction method provided by the foregoing embodiments.

According to the positioning correction apparatus provided in this embodiment of this application, a distance between the reference location selected by the apparatus and the projection location of the corresponding target path is less than the specified threshold. Therefore, an error between the corrected location of the reference location that is determined by the apparatus and an actual location of the terminal device is relatively small, that is, the apparatus can improve confidence of the determined corrected location of the reference location, thereby improving confidence of a corrected location of another measured location that is determined based on the corrected location of the reference location. Obviously, according to the foregoing solution, positioning track data generated based on the base station positioning technology can be corrected and confidence and accuracy of the determined corrected location can be improved.

This application is described with reference to the flowcharts and/or block diagrams of the method, the device (system), and the computer program product according to this application. It should be understood that computer program instructions may be used to implement each process and/or each block in the flowcharts and/or the block diagrams and a combination of a process and/or a block in the flowcharts and/or the block diagrams. These computer program instructions may be provided for a general-purpose computer, a dedicated computer, an embedded processor, or a processor of any other programmable data processing device to generate a machine, so that the instructions executed by a computer or a processor of any other programmable data processing device generate an apparatus for implementing a specific function in one or more processes in the flowcharts and/or in one or more blocks in the block diagrams.

These computer program instructions may be stored in a computer readable memory that can instruct the computer or any other programmable data processing device to work in a specific manner, so that the instructions stored in the computer readable memory generate an artifact that includes an instruction apparatus. The instruction apparatus implements a specific function in one or more processes in the flowcharts and/or in one or more blocks in the block diagrams.

These computer program instructions may be loaded onto a computer or another programmable data processing device, so that a series of operations and steps are performed on the computer or the another programmable device, thereby generating computer-implemented processing. Therefore, the instructions executed on the computer or the another programmable device provide steps for implementing a specific function in one or more processes in the flowcharts and/or in one or more blocks in the block diagrams.

Obviously, a person skilled in the art can make various modifications and variations to this application without departing from the spirit and scope of this application. This application is intended to cover these modifications and variations of this application provided that they fall within the scope of protection defined by the following claims and their equivalent technologies.

**Claims**

1. A positioning correction method, comprising:

   obtaining a plurality of measured locations of a terminal device, wherein any one of the measured locations is a physical location of the terminal device that is obtained by a measurement device by performing positioning measurement on the terminal device, and the measurement device is the terminal device or a base station;
   selecting a plurality of matching locations from the plurality of measured locations;
   matching the plurality of matching locations to a road network, to obtain a target road section corresponding to each matching location, wherein the road network is a road section set comprising a plurality of crossing road sections in different directions;
   obtaining a moving path of the terminal device based on the obtained target road section corresponding to each matching location and road section distribution in the road network, wherein road sections forming the moving path comprise at least the obtained target road section corresponding to each matching location;

determining, in the moving path, a target road section corresponding to a measured location different from the plurality of matching locations in the plurality of measured locations;

selecting a plurality of reference locations from the plurality of measured locations, wherein a distance between any one of the reference locations and a projection location of the reference location in the corresponding target road section is less than a specified threshold;

determining that corrected locations of the plurality of reference locations in the moving path are projection locations of the plurality of reference locations in the corresponding target road sections;

obtaining timestamps of the plurality of measured locations, wherein the timestamp of any one of the measured locations is a time at which the measured location is obtained through measurement; and

determining, in the moving path and based on the timestamps of the plurality of measured locations and the corrected locations of the plurality of reference locations, a corrected location of a measured location different from the plurality of reference locations in the plurality of measured locations.

2. The method according to claim 1, wherein the obtaining a plurality of measured locations of a terminal device comprises:
obtaining the plurality of measured locations sent by the base station.

3. The method according to claim 1 or 2, wherein the matching the plurality of matching locations to a road network, to obtain a target road section corresponding to each matching location in the road network comprises:
matching the plurality of matching locations to the road network by using a map-matching algorithm based on a hidden Markov model HMM, to obtain the target road section corresponding to each matching location in the road network.

4. The method according to any one of claims 1 to 3, wherein the plurality of matching locations comprise the initial measured location and the last measured location in the plurality of measured locations; and
the determining, in the moving path, a target road section corresponding to a measured location different from the plurality of matching locations in the plurality of measured locations comprises:

determining two matching locations neighboring the left side and the right side of a first measured location, wherein the first measured location is a measured location different from the plurality of matching locations in the plurality of measured locations;
determining one or more to-be-selected road sections between the two matching locations in the moving path; and
using the to-be-selected road section as a target road section corresponding to the first measured location, when there is one determined to-be-selected road section; or

selecting a target road section corresponding to the first measured location from the plurality of to-be-selected road sections, when there are a plurality of determined to-be-selected road sections, wherein a first distance between the first measured location and a first projection location is less than a second distance between the first measured location and a second projection location, the first projection location is a projection location of the first measured location in the selected target road section, and the second projection location is a projection location of the first measured location in any to-be-selected road section different from the selected target road section in the plurality of to-be-selected road sections.

5. The method according to any one of claims 1 to 4, wherein the determining, in the moving path and based on the timestamps of the plurality of measured locations and the corrected locations of the plurality of reference locations, a corrected location of a measured location different from the plurality of reference locations in the plurality of measured locations comprises:

determining two reference locations neighboring the left side and the right side of a second measured location, wherein the second measured location is a measured location different from the plurality of reference locations in the plurality of measured locations;
determining a total distance between a first corrected location and a second corrected location along the moving path, wherein the first corrected location is a corrected location of a first reference location in the two reference locations, and the second corrected location is a corrected location of a second reference location in the two reference locations;
determining total duration between timestamps of the two reference locations;
calculating, based on the total distance and the total duration, an average speed of the terminal device moving from the first corrected location to the second corrected location along the moving path;

determining relative duration between a timestamp of the second measured location and a timestamp of the first reference location;

determining a relative moving distance of the terminal device based on the average speed and the relative duration; and

determining a corrected location of the second measured location in the moving path based on the relative moving distance, wherein a distance between the first corrected location and the corrected location of the second measured location along the moving path is the relative moving distance.

6. A positioning correction apparatus, comprising:

an obtaining unit, configured to obtain a plurality of measured locations of a terminal device, wherein any one of the measured locations is a physical location of the terminal device that is obtained by a measurement device by performing positioning measurement on the terminal device, and the measurement device is the terminal device or a base station;

a first selection unit, configured to select a plurality of matching locations from the plurality of measured locations;

a matching unit, configured to match the plurality of matching locations to a road network, to obtain a target road section corresponding to each matching location, wherein the road network is a road section set comprising a plurality of crossing road sections in different directions; and obtain a moving path of the terminal device based on the obtained target road section corresponding to each matching location and road section distribution in the road network, wherein road sections forming the moving path comprise at least the obtained target road section corresponding to each matching location;

a determining unit, configured to determine, in the moving path, a target road section corresponding to a measured location different from the plurality of matching locations in the plurality of measured locations;

a second selection unit, configured to select a plurality of reference locations from the plurality of measured locations, wherein a distance between any one of the reference locations and a projection location of the reference location in the corresponding target road section is less than a specified threshold;

a processing unit, configured to determine that corrected locations of the plurality of reference locations in the moving path are projection locations of the plurality of reference locations in corresponding target road sections; obtain timestamps of the plurality of measured locations, wherein the timestamp of any one of the measured locations is a time at which the measured location is obtained through measurement; and determine, in the moving path and based on the timestamps of the plurality of measured locations and the corrected locations of the plurality of reference locations, a corrected location of a measured location different from the plurality of reference locations in the plurality of measured locations.

7. The apparatus according to claim 6, wherein when obtaining the plurality of measured locations of the terminal device, the obtaining unit is specifically configured to:
obtain the plurality of measured locations sent by the base station.

8. The apparatus according to claim 6 or 7, wherein when matching the plurality of matching locations to the road network, to obtain the target road section corresponding to each matching location in the road network, the matching unit is specifically configured to:
match the plurality of matching locations to the road network by using a map-matching algorithm based on a hidden Markov model HMM, to obtain the target road section corresponding to each matching location in the road network.

9. The apparatus according to any one of claims 6 to 8, wherein the plurality of matching locations comprise the initial measured location and the last measured location in the plurality of measured locations; and
when determining, in the moving path, the target road section corresponding to the measured location different from the plurality of matching locations in the plurality of measured locations, the determining unit is specifically configured to:

determine two matching locations neighboring the left side and the right side of a first measured location, wherein the first measured location is a measured location different from the plurality of matching locations in the plurality of measured locations; and determine one or more to-be-selected road sections between the two matching locations in the moving path; and

use the to-be-selected road section as a target road section corresponding to the first measured location, when there is one determined to-be-selected road section; or

select a target road section corresponding to the first measured location from the plurality of to-be-selected road sections, when there are a plurality of determined to-be-selected road sections, wherein a first distance between the first measured location and a first projection location is less than a second distance between the first measured location and a second projection location, the first projection location is a projection location of the first measured location in the selected target road section, and the second projection location is a projection location of the first measured location in any to-be-selected road section different from the selected target road section in the plurality of to-be-selected road sections.

10. The apparatus according to any one of claims 6 to 9, wherein when determining, in the moving path and based on the timestamps of the plurality of measured locations and the corrected locations of the plurality of reference locations, the corrected location of the measured location different from the plurality of reference locations in the plurality of measured locations, the processing unit is specifically configured to:

determine two reference locations neighboring the left side and the right side of a second measured location, wherein the second measured location is a measured location different from the plurality of reference locations in the plurality of measured locations;
determine a total distance between a first corrected location and a second corrected location along the moving path, wherein the first corrected location is a corrected location of a first reference location in the two reference locations, and the second corrected location is a corrected location of a second reference location in the two reference locations;
determine total duration between timestamps of the two reference locations;
calculate, based on the total distance and the total duration, an average speed of the terminal device moving from the first corrected location to the second corrected location along the moving path;
determine relative duration between a timestamp of the second measured location and a timestamp of the first reference location;
determine a relative moving distance of the terminal device based on the average speed and the relative duration; and
determine a corrected location of the second measured location in the moving path based on the relative moving distance, wherein a distance between the first corrected location and the corrected location of the second measured location along the moving path is the relative moving distance.

FIG. 1

FIG. 2

Positioning server 303

Terminal
device 301

Base station 302

FIG. 3

S401

A positioning correction apparatus obtains a plurality of measured locations of a terminal device

S402

The positioning correction apparatus selects a plurality of matching locations from the plurality of measured locations

S403

The positioning correction apparatus matches the plurality of matching locations to a road network, to obtain target road sections corresponding to all matching locations

S404

The positioning correction apparatus obtains a moving path of the terminal device based on the obtained target road sections corresponding to all the matching location and road section distribution in the road network

S405

The positioning correction apparatus determines, in the moving path, a target road section corresponding to a measured location different from the plurality of matching locations in the plurality of measured locations

S406

The positioning correction apparatus selects a plurality of reference locations from the plurality of measured locations

S407

The positioning correction apparatus determines that corrected locations of the plurality of reference locations in the moving path are projection locations of the plurality of reference locations in the corresponding target road sections

S408

The positioning correction apparatus obtains timestamps of the plurality of measured locations

S409

The positioning correction apparatus determines, in the moving path and based on the timestamps of the plurality of measured locations and the corrected locations of the plurality of reference locations, a corrected location of a measured location different from the plurality of reference locations in the plurality of measured locations

FIG. 4

$P_{i+6}$

$P_{i+8}$

$r_b$

$r_c$

$P_{i+7}$

$P_{i+5}$

$P_{i+1}$

$P_{i+3}$

$r_a$

$P_i$

$P_{i+4}$

$P_{i+2}$

FIG. 5

$r_c$

$r_b$

$P_{i+1}$

$P_{i+3}\,(M_{j+1})$

$r_a$

$P_i\,(M_j)$

$P_{i+2}$

FIG. 6

Second
distance

First
distance

$P_{i+3}$
$(M_{j+1})$

$r_c$

$r_b$

$P_{i+1}$

$X_{i+1,b}$

$P_{i+2}$

$r_a$

$P_i(M_j)$

$X_{i+1,a}$

FIG. 7

$P_{i+5}(S_{j+1})$

$P_{i+4}$

$Y_{i+4}$

$Y_{i+5}$

$r_c$

$r_b$

$P_{i+3}$

$P_{i+1}$

$Y_{i+3}$

$P_{i+2}$

$Y_i$

$Y_{i+1}$

$Y_{i+2}$

$r_a$

$P_i(S_j)$

FIG. 8

900

Positioning correction apparatus

901

Obtaining unit

902

First
selection unit

903

Matching unit

906

Processing unit

905

Second
selection unit

904

Determining unit

FIG. 9

1000

Positioning correction apparatus

1004

1001

Communications module

Processor

1003

1002

Memory

FIG. 10

## INTERNATIONAL SEARCH REPORT

International application No.

**PCT/CN2018/087891**

### A. CLASSIFICATION OF SUBJECT MATTER

H04W 40/20(2009.01)i

According to International Patent Classification (IPC) or to both national classification and IPC

### B. FIELDS SEARCHED

Minimum documentation searched (classification system followed by classification symbols)

H04W; H04Q; H04L; G01S

Documentation searched other than minimum documentation to the extent that such documents are included in the fields searched

Electronic data base consulted during the international search (name of data base and, where practicable, search terms used)

CNTXT; CNABS; WOTXT; USTXT; VEN; EPTXT: 定位纠偏, 定位, 路段, 道路, 路径, 纠偏, 纠正, 矫正, 投影, 时间, 阈值, 速度, 距离, 位置, positioning, correct, corrected, correcting, correction, path, road, projection, time, stamp, threshold, velocity, speed, diatance, location

### C. DOCUMENTS CONSIDERED TO BE RELEVANT

| Category* | Citation of document, with indication, where appropriate, of the relevant passages | Relevant to claim No. |
|---|---|---|
| X | CN 102879003 A (CHONGQING UNIVERSITY) 16 January 2013 (2013-01-16) description, paragraphs [0070]-[0108], and figures 1-7 | 1-10 |
| A | CN 106469505 A (FOUNDER INTERNATIONAL (BEIJING) CO., LTD.; FOUNDER INTERNATIONAL SOFTWARE CO., LTD.) 01 March 2017 (2017-03-01) entire document | 1-10 |
| A | CN 102175254 A (SUPERMAP SOFTWARE CO., LTD.) 07 September 2011 (2011-09-07) entire document | 1-10 |
| A | US 2017097642 A1 (DENSO CORP.) 06 April 2017 (2017-04-06) entire document | 1-10 |
| A | CN 103118427 A (BEIJING BAIDU NETCOM SCIENCE AND TECHNOLOGY CO., LTD.) 22 May 2013 (2013-05-22) entire document | 1-10 |

☐ Further documents are listed in the continuation of Box C.   ☑ See patent family annex.

| | |
|---|---|
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | "&" document member of the same patent family |
| "P" document published prior to the international filing date but later than the priority date claimed | |

| Date of the actual completion of the international search | Date of mailing of the international search report |
|---|---|
| **03 August 2018** | **22 August 2018** |

| Name and mailing address of the ISA/CN | Authorized officer |
|---|---|
| **State Intellectual Property Office of the P. R. China** **No. 6, Xitucheng Road, Jimenqiao Haidian District, Beijing 100088** **China** | |
| Facsimile No. **(86-10)62019451** | Telephone No. |

Form PCT/ISA/210 (second sheet) (January 2015)

INTERNATIONAL SEARCH REPORT
Information on patent family members

International application No.

**PCT/CN2018/087891**

| Patent document cited in search report | | | Publication date (day/month/year) | Patent family member(s) | | | Publication date (day/month/year) |
|---|---|---|---|---|---|---|---|
| CN | 102879003 | A | 16 January 2013 | CN | 102879003 | B | 25 February 2015 |
| CN | 106469505 | A | 01 March 2017 | | None | | |
| CN | 102175254 | A | 07 September 2011 | CN | 102175254 | B | 20 February 2013 |
| US | 2017097642 | A1 | 06 April 2017 | US | 9952597 | B2 | 24 April 2018 |
| | | | | JP | 2017058235 | A | 23 March 2017 |
| CN | 103118427 | A | 22 May 2013 | US | 9107181 | B2 | 11 August 2015 |
| | | | | CN | 103118427 | B | 07 January 2015 |
| | | | | US | 2014315583 | A1 | 23 October 2014 |
| | | | | WO | 2013071885 | A1 | 23 May 2013 |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 201710499498